(19) Europäisches Patentamt
European Patent Office
Office européen des brevets

(11) **EP 4 692 411 A1**

(12) **EUROPEAN PATENT APPLICATION**
published in accordance with Art. 153(4) EPC

(43) Date of publication:
**11.02.2026 Bulletin 2026/07**

(21) Application number: **24780915.5**

(22) Date of filing: **29.03.2024**

(51) International Patent Classification (IPC):
***C23C 2/06*** (2006.01)     ***B32B 15/08*** (2006.01)
***B32B 27/18*** (2006.01)

(52) Cooperative Patent Classification (CPC):
**B32B 15/08; B32B 27/18; C23C 2/06**

(86) International application number:
**PCT/JP2024/013330**

(87) International publication number:
**WO 2024/204822 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **30.03.2023 JP 2023056126**

(71) Applicant: **Nippon Steel Corporation
Tokyo 1008071 (JP)**

(72) Inventors:
• **KAWAMURA, Yasuaki**
  **Tokyo 100-8071 (JP)**
• **FUJII, Takashi**
  **Tokyo 100-8071 (JP)**
• **TOSHIN, Kunihiko**
  **Tokyo 100-8071 (JP)**
• **UENO, Shin**
  **Tokyo 100-8071 (JP)**
• **UEDA, Daichi**
  **Tokyo 100-8071 (JP)**

(74) Representative: **Vossius & Partner
Patentanwälte Rechtsanwälte mbB
Siebertstrasse 3
81675 München (DE)**

(54) **SURFACE-TREATED STEEL SHEET**

(57)     A surface-treated steel sheet including a Zn-Al-Mg-based coated steel sheet having an amount of coating weight per one surface, of from 20 to 60 g/m$^2$, and a paint film placed on at least one main surface of the Zn-Al-Mg-based coated steel sheet, in which the paint film includes a binder resin, a doped zinc oxide particle, and a rust inhibitor, an average thickness of the paint film is from 0.5 to 3 $\mu$m, an average particle size of the doped zinc oxide particle is from 0.1 to 2 $\mu$m, a content of the doped zinc oxide particle is from 20 to 40% by mass with respect to the paint film, and a content of an inorganic substance other than a Zn-containing compound in the paint film is from 0 to 1% by mass with respect to the paint film.

FIG. 1

EP 4 692 411 A1

**Description**

Technical Field

The present disclosure relates to a surface-treated steel sheet.

Background Art

Surface-treated steel sheets are, for example, press-formed, then assembled into desired shapes by spot welding or the like, thereafter electrodeposition-coated, or intermediate-coated in the case of omission of such electrodeposition-coating, and applied to automobile members.

Corrosion resistance of automobile members is often ensured with chemical conversion-treated films by chemical conversion treatment steps and electrodeposition- paint films by subsequent electrodeposition-coating steps. However, portions with no creeping of chemical conversion-treated films and electrodeposition-paint films may be generated in joining portions (sheet-joining portions) of forming materials of surface-treated steel sheets, in particular, sheet-joining portions and folded hem portions of inner surfaces of bag-shaped members. In this case, such joining portions of forming materials are highly likely to be exposed in a state of nakedness to corrosion environments. Therefore, there is a need for a surface-treated steel sheet capable of ensuring corrosion resistance.

Thus, surface-treated steel sheets need to have weldability increased by making paint films conductive so that resistance welding is possible, and also to have corrosion resistance imparted.

For example, Patent Literature 1 proposes "a surface-treated steel sheet having a paint film on at least one surface of a coated steel sheet, wherein the paint film includes a binder resin, a V-containing non-oxide ceramic particle (except for a VC particle), and a doped zinc oxide particle, and the contents of the V-containing non-oxide ceramic particle and the doped zinc oxide particle, with respect to the paint film, satisfy the following Formulas:

$$C_{Zn} \geq 10.0 \qquad \ldots (1)$$

$$CV \leq 0.5 \cdot C_{Zn} \qquad \ldots (2)$$

$$CV \leq 70 \text{-} C_{Zn} \qquad \ldots (3)$$

$$CV \geq 0.125 \cdot C_{Zn} \qquad \ldots (4)$$

$$CV \geq 2.0 \qquad \ldots (5)$$

provided that CV and CZn respectively mean the content (% by mass) of the V-containing non-oxide ceramic particle and the content (% by mass) of the doped zinc oxide particle.".

Patent Literature 1 describes "a surface-treated steel sheet excellent in both corrosion resistance before electrodeposition-coating, and weldability can be provided".

Citation List

Patent Literature

Patent Literature 1: WO 2018/092244

SUMMARY OF INVENTION

Technical Problem

Surface-treated steel sheets widely utilized in applications of not only automobile members, but also mechanical members, home-appliance members, building materials and the like, need to be increased in corrosion resistance and weldability.

However, various research and developments including those in Patent Literature 1 described above have been conventionally made, but surface-treated steel sheets are currently desired to be further improved in corrosion resistance and weldability due to current requirements.

An object of the disclosure is to provide a surface-treated steel sheet excellent in both corrosion resistance and weldability.

Solution to Problem

Solutions for solving the above problems include the following aspects.

<1> A surface-treated steel sheet, including:

a Zn-Al-Mg-based coated steel sheet having an amount of coating weight per one surface, of from 20 to 60 g/m$^2$; and
a paint film placed on at least one main surface of the Zn-Al-Mg-based coated steel sheet, wherein:

the paint film includes a binder resin, a doped zinc oxide particle, and a rust inhibitor,
an average thickness of the paint film is from 0.5 to 3 $\mu$m,
an average particle size of the doped zinc oxide particle is from 0.1 to 2 $\mu$m,
a content of the doped zinc oxide particle is from 20 to 40% by mass with respect to the paint film, and
a content of an inorganic substance other than a Zn-containing compound in the paint film is from 0 to 1% by mass with respect to the paint film.

<2> The surface-treated steel sheet according to <1>, wherein:

the rust inhibitor is an organic acid, and
a content of the rust inhibitor is from 1 to 20% by mass with respect to the paint film.

<3> The surface-treated steel sheet according to <1> or <2>, wherein:

the surface-treated steel sheet has an intermediate-paint film between the Zn-Al-Mg-based coated steel sheet and the paint film,
the intermediate-paint film includes a binder resin, a silane coupling agent, a silica fine particle, a phosphoric acid compound, and a fluorine compound, and
an average thickness of the intermediate-paint film is from 0.1 to 0.5 $\mu$m.

<4> The surface-treated steel sheet according to any one of <1> to <3>, wherein:
a chemical composition of a Zn-Al-Mg-based coating layer in the Zn-Al-Mg-based coated steel sheet, in terms of an average composition, contains Al: from 4 to 22% by mass, and Mg: from 1.0 to 10% by mass, and a balance contains Zn and impurities.

Advantageous Effect of Invention

According to the disclosure, a surface-treated steel sheet excellent in corrosion resistance and weldability can be provided.

BRIEF DESCRIPTION OF DRAWINGS

[FIG. 1] FIG. 1 is a schematic cross-sectional view illustrating one example of the surface-treated steel sheet according to the present embodiment.
[FIG. 2] FIG. 2 is a cross-sectional view illustrating one example of the coating member according to the embodiment.
[FIG. 3] FIG. 3 is a schematic plan view illustrating a joining test piece produced in a corrosion resistance test in Examples.
[FIG. 4] FIG. 4 is a schematic side view illustrating a joining test piece produced in a corrosion resistance test in Examples.

DESCRIPTION OF EMBODIMENTS

Hereinafter, an embodiment as one example of the disclosure is described.

Herein, a case in which the lower limit value of the content of each element in a chemical composition is designated as "0" means that such each element is an optional component and need not be contained.

A case in which numerical values described before and after "to" in a numerical value range expressed with "(from) ... to ... " are not provided with "more than" and "less than" means a range including these numerical values respectively as the lower limit value and the upper limit value. A numerical value range in a case in which numerical values described before and after "to" are provided with "more than" and "less than" means a range not including these numerical values respectively as the lower limit value and the upper limit value.

The upper limit value in a certain numerical value range described stepwise, as a numerical value range described stepwise, may be replaced with the upper limit value in any other numerical value range described stepwise, or may be replaced with any value described in Examples. The lower limit value in a certain numerical value range described stepwise may be replaced with the lower limit value in any other numerical value range described stepwise, or may be replaced with any value described in Examples.

The term "step" includes not only an independent step, but also any step as long as such any step achieves a predetermined object of such an independent step even in the case of being indistinguishable from other steps.

<Surface-Treated Steel Sheet>

The surface-treated steel sheet according to the embodiment includes

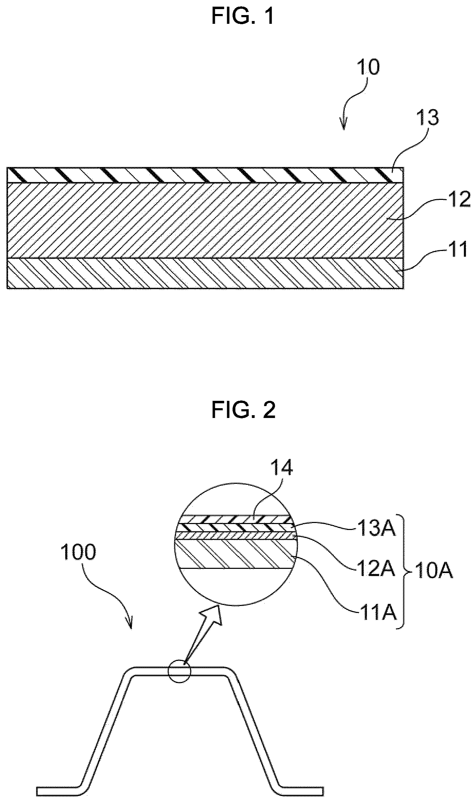

a Zn-Al-Mg-based coated steel sheet having an amount of coating weight per one surface, of from 20 to 60 g/m$^2$, and a paint film placed on at least one main surface of the Zn-Al-Mg-based coated steel sheet (see FIG. 1), wherein:

the paint film includes a binder resin, a doped zinc oxide particle, and a rust inhibitor,
the average thickness of the paint film is from 0.5 to 3 $\mu$m,
the average particle size of the doped zinc oxide particle is from 0.1 to 2 $\mu$m,
the content of the doped zinc oxide particle is from 20 to 40% by mass with respect to the paint film, and
the content of an inorganic substance other than a Zn-containing compound in the paint film is from 0 to 1% by mass with respect to the paint film.

In FIG. 1, 10 represents the surface-treated steel sheet, 11 represents a matrix steel sheet (an objective steel sheet on which the Zn-Al-Mg-based coating layer is to be formed) in the Zn-Al-Mg-based coated steel sheet, 12 represents a Zn-Al-Mg-based coating layer of the Zn-Al-Mg-based coated steel sheet, and 13 represents the paint film.

Herein, the main surface of the Zn-Al-Mg-based coated steel sheet means opposite two surfaces in the thickness direction of the Zn-Al-Mg-based coated steel sheet.

The one surface of the Zn-Al-Mg-based coated steel sheet means one surface of paired opposite surfaces in the thickness direction of the Zn-Al-Mg-based coated steel sheet.

The surface-treated steel sheet according to the embodiment has the above configuration and therefore serves as a surface-treated steel sheet excellent in both corrosion resistance and weldability. The surface-treated steel sheet according to the embodiment has been found based on the following findings.

The inventors have made studies about corrosion resistance and weldability of the surface-treated steel sheet. As a result, the following findings have been obtained.

A zinc-based coated steel sheet in which galvanization is applied onto a steel sheet has been heretofore mainly used for a surface-treated steel sheet to be applied to applications of automobile components and the like in order that corrosion resistance and weldability are ensured. A coated steel sheet in which a paint film containing a binder resin, a rust-inhibiting pigment, and a rust inhibitor is provided on a zinc-based coated steel sheet is studied in order that not only weldability is maintained, but also corrosion resistance is further improved.

In this regard, a portion with no creeping of a chemical conversion-treated film and an electrodeposition-paint film is generated in a joining portion or the like (sheet-joining portion) of a forming material of a surface-treated steel sheet, and such a joining part of a forming material is exposed in a state of nakedness to corrosion environments and corrosion progresses in some cases.

A Zn-Al-Mg-based coated steel sheet is then applied as a zinc-based coated steel sheet, thereby allowing a surface-treated steel sheet to exhibit excellent corrosion resistance.

However, in a case in which a Zn-Al-Mg-based coated steel sheet excellent in corrosion resistance is applied, Al and Mg as constituents of coating are attached to a welding electrode during welding, thereby causing deterioration of weldability (in particular, continuous spotting properties of spot welding).

The amount of coating weight per one surface of the Zn-Al-Mg-based coated steel sheet is decreased to from 20 to 60 g/m$^2$, whereby attachment of Al and Mg to the welding electrode during welding is suppressed.

Additionally, a large-diameter doped zinc oxide particle having an average particle size of from 0.1 to 2 μm is applied as a rust-inhibiting pigment to be contained in a paint film, and the content of such a doped zinc oxide particle is increased to from 20 to 40% by mass. Thus, the welding electrode is easily in contact with the doped zinc oxide particle during welding, and is hardly in contact with a Zn-Al-Mg-based coating layer of the Zn-Al-Mg-based coated steel sheet.

A Zn-containing compound such as a doped zinc oxide particle hardly causes a welding failure, even in a case in which the Zn-containing compound is in contact with and attached to the welding electrode during welding. The reason for this is because the Zn-containing compound, among inorganic substances, when attached to the welding electrode, is mainly attached as zinc oxide to the welding electrode and also is low in reactivity with a metal component (for example, Cu) of the welding electrode, and therefore hardly prevents welding even in the case of being attached to the welding electrode.

Therefore, a paint film is needed not to contain an inorganic substance other than the Zn-containing compound, or is needed to contain an inorganic substance other than the Zn-containing compound at a content with respect to the paint film, controlled to 1% by mass or less, even in the case of containing the inorganic substance other than the Zn-containing compound.

It has been found from the above findings that the surface-treated steel sheet according to the embodiment is a surface-treated steel sheet excellent in corrosion resistance and weldability.

Hereinafter, the detail of the surface-treated steel sheet according to the embodiment is described.

(Zn-Al-Mg-Based Coated steel Sheet)

The Zn-Al-Mg-based coated steel sheet is a steel sheet in which a Zn-Al-Mg-based coating layer containing at least Zn, Al, and Mg is formed on a matrix steel sheet. The Zn-Al-Mg-based coating layer containing at least Zn, Al, and Mg is a coating layer that contains Zn as a main component (contains Zn as a major component at a content of, for example, 40% by mass or more) and that is excellent in corrosion resistance.

The Zn-Al-Mg-based coating layer may contain an element such as Si, Ni, Ti, Zr, Sr, Fe, Sb, Pb, Sn, Ca, Co, Mn, P, B, Bi, Cr, Sc, Y, REM, Hf, or C, other than Zn, Al and Mg.

A specific chemical component of the Zn-Al-Mg-based coating layer is, for example, a chemical composition in which Al: from 4 to 22% by mass and Mg: from 1 to 10% by mass in terms of the average composition are contained and the balance contains Zn and impurities.

A more preferred specific chemical component of the Zn-Al-Mg-based coating layer is, for example, a chemical composition in which Al: from 4 to 22% by mass, Mg: from 1 to 10% by mass, and Si: from 0.0001 to 2% by mass in terms of the average composition are contained and the balance contains Zn and impurities.

The "impurity" in the Zn-Al-Mg-based coating layer refers to a component contained in a raw material or a component incorporated in the course of production, in which such a component is not intentionally contained. For example, a trace amount of any other component than Fe may be incorporated as an impurity in the Zn-Al-Mg-based coating layer, due to mutual atom diffusion between the matrix steel sheet and the Zn-Al-Mg-based coating layer.

The matrix steel sheet (an objective steel sheet on which the Zn-Al-Mg-based coating layer is to be formed) of the Zn-Al-Mg-based coated steel sheet is not particularly limited. The matrix steel sheet may be a hot-rolled steel sheet obtained by hot-rolling a slab having an appropriate chemical composition of steel, a cold-rolled steel sheet obtained by cold-rolling such a hot-rolled steel sheet, or the like. The strength of the matrix steel sheet can be, for example, from 270 to 1470 MPa in terms of a tensile strength class.

The thickness of the matrix steel sheet is not particularly limited, and is preferably from 0.4 to 3.2 mm, more preferably from 0.5 to 2.4 mm.

The thickness of the Zn-Al-Mg-based coated steel sheet is measured with a micro-gauge (CPM-MX manufactured by Mitutoyo Corporation).

The amount of coating weight per one surface of the Zn-Al-Mg-based coated steel sheet is from 20 to 60 g/m$^2$.

In a case in which the amount of coating weight is too small, corrosion resistance deteriorates. In this regard, in a case in which the amount of coating weight is too large, Al and Mg are easily attached to a welding electrode during welding, and weldability deteriorates.

Accordingly, the amount of coating weight is in the above range.

The amount of coating weight is preferably from 25 to 50 g/m$^2$, more preferably from 30 to 40 g/m$^2$.

Measurement of the amount of coating weight is as follows.

The amount of the coating layer attached can be measured by dissolving the coating layer in an acid solution to which an inhibitor for suppression of corrosion of the matrix steel sheet (acid pickling), and determining the change in weight before and after such acid pickling. In a case in which a paint film is present, the amount can be measured by performing the above acid pickling after removal of such a paint film by a chemical product (remover or the like) or resin shot.

The method of forming the Zn-Al-Mg-based coating layer of the Zn-Al-Mg-based coated steel sheet is not particularly limited. For example, the Zn-Al-Mg-based coating layer is formed with hot dipping or the like. The Zn-Al-Mg-based coating layer may be formed in any system of a continuous system or a batch system. After formation of the Zn-Al-Mg-based coating layer, any treatment such as zero spangle treatment as appearance homogenization treatment, annealing treatment as modification treatment of the Zn-Al-Mg-based coating layer, or temper rolling for surface state or material adjustment may be applied.

(Paint film)

The paint film includes a binder resin, a doped zinc oxide particle, and a rust inhibitor. The paint film may include, if necessary, any other component.

-Binder Resin-

The binder resin may be any of a water-soluble or water-dispersible, water-based resin to be dissolved or dispersed in water, or a solvent-based resin to be dissolved or dispersed in an organic solvent, and is preferably the water-based resin in terms of production cost and environmental suitability.

Examples of the water-based resin include a water-soluble or water-dispersible resin such as a polyester resin, a urethane resin, a polyolefin resin, an acrylic resin, an epoxy resin, a phenol resin, or a mixed resin of two or more of these resins.

In the case of use of the polyester resin, the molecular weight is preferably from 10000 to 30000. In a case in which the molecular weight is 10000 or more, sufficient processability can be ensured. In this regard, in a case in which the molecular weight is 30000 or less, a binding site in the resin itself is increased, and excellent adhesiveness with an electrodeposition-paint film can be ensured. In the case of crosslinking by use of a curing agent such as melamine, a crosslinking reaction is sufficiently performed, and performance of the paint film can be ensured. The molecular weight of the polyester resin is here the weight average molecular weight.

In the case of use of the urethane resin, the form of the urethane resin is preferably an emulsion having an emulsion particle size of from 10 to 100 nm (preferably from 20 to 60 nm). In a case in which the emulsion particle size is 10 nm or more, an increase in cost is suppressed. In this regard, in a case in which the emulsion particle size is 100 nm or less, a gap between such emulsions is small in a paint film formed, and barrier properties of the paint film can be ensured. Examples of the type of the urethane resin include ether, polycarbonate, ester, or acrylic graphite type. These may be used singly, or in combination thereof.

Examples of the solvent-based resin include a polyester resin, a urethane resin, an epoxy resin, an acrylic resin, or a mixed resin of two or more of these resins.

The binder resin may be a crosslinked resin having a crosslinked structure, or may be a non-crosslinked resin not having a crosslinked structure, and is preferably the non-crosslinked resin in terms of low-temperature formation of the paint film. The crosslinking agent (curing agent) which imparts a crosslinked structure to the binder resin is preferably a water-soluble crosslinking agent. The crosslinking agent is specifically preferably melamine, isocyanate, a silane compound, a zirconium compound, a titanium compound, or the like.

The amount of the crosslinking agent added, with respect to 100 parts by mass of the resin solid content, is preferably from 5 parts by mass to 30 parts by mass. In a case in which the amount of the crosslinking agent added is 5 parts by mass or more, a crosslinking reaction with the binder resin is ensured, and the performance of the paint film is sufficient. In this regard, in a case in which the amount of the crosslinking agent added is 30 parts by mass or less, the paint film is inhibited from being excessively hard due to excess progression of such a crosslinking reaction. Thus, processability can be ensured. Coating material stability of the silane compound, the zirconium compound, or the titanium compound can also be ensured.

The content of the binder resin with respect to the paint film (the entire solid content of the paint film) is preferably 10.0 to 90.0% by mass. In a case in which the content of the binder resin is 10.0% by mass or more, the function of the binder is easily expressed, and the aggregation force of the paint film is improved. Thus, cohesion in the paint film (a cohesive failure of the paint film) hardly occurs when an adhesiveness test and forming processing are performed. In this regard, in a case in which the content of the binder resin is 90.0% by mass or less, a pigment component included in the paint film is decreased in ratio, and all of weldability, corrosion resistance, and adhesiveness with an electrodeposition-paint film are easily satisfied.

The content of the binder resin with respect to the paint film (the entire solid content of the paint film) is more preferably from 15.0 to 80.0% by mass from the viewpoint that the binder function is expressed and also all of weldability, corrosion resistance, and adhesiveness with an electrodeposition-paint film are satisfied.

-Doped Zinc Oxide Particle-

The doped zinc oxide particle is a conductive zinc oxide particle. In a case in which a doped zinc oxide particle having conductivity is included in the paint film, weldability is improved.

Examples of the doped zinc oxide particle include a particle which expresses conductivity by doping a zinc oxide particle with at least one element (hereinafter, also referred to as "doped element") selected from the group consisting of Group 13 elements in the periodic table and Group 15 elements in the periodic table.

Examples of the Group 13 elements in the periodic table include B, Al, Ga, and In. Examples of the Group 15 elements in the periodic table include P and As. Among these, the doped element is preferably Al or Ga in terms of an improvement in conductivity. The doped element is more preferably Al furthermore from the viewpoint of cost.

The content of the doped element, with respect to an undoped zinc oxide particle, is preferably from 0.05 to 5% by atom, more preferably from 0.1 to 5% by atom in terms of an improvement in conductivity.

The average particle size of the doped zinc oxide particle is from 0.1 to 2 $\mu$m.

In a case in which the average particle size is too small, a welding electrode is easily in contact with the Zn-Al-Mg-based coating layer of the Zn-Al-Mg-based coated steel sheet, during welding, and weldability is reduced. In this regard, in a case in which the average particle size is too large, the doped zinc oxide particle is hardly homogeneously in contact with a welding electrode (for example, Cu electrode) during welding, and as a result, the welding electrode is easily in contact with the Zn-Al-Mg-based coating layer of the Zn-Al-Mg-based coated steel sheet and weldability is reduced.

Accordingly, the average particle size of the doped zinc oxide particle is in the above range.

The average particle size of the doped zinc oxide particle is preferably from 0.2 to 1.5 $\mu$m, more preferably from 0.4 to 1.0 $\mu$m.

The "average particle size" of the doped zinc oxide particle refers to an average primary particle size in a case in which the doped zinc oxide particle is singly present in the paint film, or means an average secondary particle size representing the particle size of such an oxide particle during aggregation in a case in which such doped zinc oxide particles are aggregated and present.

The average particle size of the doped zinc oxide particle is determined by the following measurement method.

First, a surface-treated substrate on which the paint film is formed is cut along with a sheet thickness direction, thereby exposing its cross section, resin embedding is carried out, and then the cross section exposed is polished with a polishing machine. Au is vapor-deposited on the cross section after polishing, thereby producing a sample for cross section observation. The cross section thus obtained is observed with a scanning-type electron microscope, and an observation image of the cross section in the paint film is obtained. Twenty-five particles are arbitrarily selected from the doped zinc oxide particles present in a field of view of the observation image, and the long-side length and the short-side length of the conductive pigment in each of the particles are measured. Finally, the average value of the long-side length and the arithmetic average value of the short-side length are calculated and furthermore the arithmetic average value of the long-side length and the arithmetic average value of the short-side length are calculated, whereby the average particle size is calculated. The doped zinc oxide particles present in the field of view of the observation image are identified as particles located in a region in which Al is detected, in a region in which Zn is detected in EPMA analysis of the field of view of the observation image.

Observation conditions of the scanning-type electron microscope are as follows.

·	Measurement apparatus: JSM-7200F manufactured by JEOL Ltd.
·	Magnification: 5000x
·	Acceleration voltage: 10 keV
·	Image analysis software: Image J Ver.1.54f

The content of the doped zinc oxide particle is from 20 to 40% by mass with respect to the paint film (the entire solid content of the paint film).

In a case in which the content of the doped zinc oxide particle is low, a welding electrode is easily in contact with the Zn-Al-Mg-based coating layer of the Zn-Al-Mg-based coated steel sheet during welding, and weldability is reduced. In this regard, in a case in which the content of the doped zinc oxide particle is high, the ratio of the conductive pigment in the paint film is reduced, whereby performance, such as weldability and corrosion resistance, is insufficient.

Accordingly, the content of the doped zinc oxide particle is in the above range.

The content of the doped zinc oxide particle is preferably from 25 to 35% by mass, more preferably from 27 to 33% by mass.

-Rust Inhibitor-

An organic rust inhibitor such as an organic acid, an organic acid salt, an amine salt, or an ester is applied as the rust inhibitor in order to impart high weldability. The reason for this is because application with the organic rust inhibitor leads to burning and carbonizing due to heat during welding, and attachment to a welding electrode hardly occurs. Among these, an organic acid capable of imparting high corrosion resistance is preferred.

Examples of the organic acid include carboxylic acid (tartaric acid, tannic acid, oleic acid, dimer acid, naphthalene acid, or the like).

Examples of the organic acid salt include carboxylic acid metal soap (lanolin Ca, Zn naphthenate, a Ca or Ba salt of oxidized wax, or the like), or sulfonate (Na sulfonate, Ca sulfonate, Ba sulfonate).

Examples of the ester include (glycerin ester, sorbitan monoisostearate, or sorbitan monooleate of a higher fatty acid.

The content of the rust inhibitor, with respect to the paint film (the entire solid content of the paint film), is preferably from 1 to 20% by mass. In a case in which the content of the rust inhibitor is 1% by mass or more, corrosion resistance is sufficiently improved. In this regard, in a case in which the content of the rust inhibitor is 20% by mass or less, deterioration in liquid stability of a coating material is suppressed.

The content of the rust inhibitor, with respect to the paint film (the entire solid content of the paint film), is more preferably from 1 to 3% by mass from the viewpoint of corrosion resistance and coating material stability.

(Other Components)

Examples of other components include a known additive such as a lubricant, a silane coupling agent, or a leveling agent.

However, in a case in which an inorganic substance other than a Zn-containing compound is attached to a welding electrode during welding, weldability deteriorates.

Accordingly, the content of the inorganic substance other than a Zn-containing compound in the paint film is from 0 to 1% by mass with respect to the paint film.

In other words, the paint film does not include the inorganic substance other than a Zn-containing compound, or includes the inorganic substance other than a Zn-containing compound, in which the content is controlled to 1% by mass or less with respect to the paint film even in the case of the inorganic substance included.

The Zn-containing compound includes the above doped zinc oxide particle. Examples of the Zn-containing compound including the doped zinc oxide particle include Al-doped zinc oxide, Sn-doped zinc oxide, zinc oxide, zinc hydroxide, or an inorganic zinc salt. Examples of the inorganic zinc include zinc sulfate, zinc nitrate, or zinc phosphide.

Herein, a metal salt of an organic substance (a metal salt of an organic acid, or the like) does not correspond to the inorganic substance other than the Zn-containing compound including the doped zinc oxide particle.

A solid lubricant not only can impart excellent lubricity to the paint film, but also can improve powdering resistance of the paint film. Examples of the solid lubricant include the following solid lubricants (1) to (2).

(1) Polyolefin wax, paraffin wax: for example, polyethylene wax, synthetic paraffin, natural paraffin, microwax, or chlorinated hydrocarbon
(2) Fluororesin-based wax: for example, a polyfluoroethylene resin (polytetrafluoroethylene resin, or the like), a polyvinyl fluoride resin, or a polyvinylidene fluoride resin

In a case in which polyethylene wax is used as the solid lubricant, the average particle size is preferably from 0.5 to 10 $\mu$m. In a case in which the average particle size of the polyethylene wax is 0.5 $\mu$m or more, an increase in concentration of the polyethylene wax on a surface is suppressed, and deterioration in adhesiveness between the paint film and an electrodeposition-paint film can be suppressed. In this regard, in a case in which the average particle size of the solid lubricant is 10 $\mu$m or less, the polyethylene wax is inhibited from dropping from the paint film, and lubricity and corrosion resistance can be ensured. The average particle size of the solid lubricant is more preferably from 1 to 5 $\mu$m from the viewpoint that excellent adhesiveness between the paint film and an electrodeposition-paint film, corrosion resistance, lubricity, and powdering resistance are obtained.

The softening point of the solid lubricant is preferably from 100°C to 135°C, more preferably from 110°C to 130°C. In a case in which the softening point of the solid lubricant is from 100°C to 135°C, lubricity and powdering resistance of the paint film are further improved.

The content of the solid lubricant, with respect to the paint film (the entire solid content of the paint film), is preferably from 0.1 to 10% by mass. In a case in which the content of the solid lubricant is 0.1% by mass or more, lubricity is sufficiently obtained. In this regard, in a case in which the content of the solid lubricant is 10% by mass or less, adhesiveness between the paint film and an electrodeposition-paint film, and corrosion resistance can be inhibited from deteriorating.

The content of the solid lubricant, with respect to the paint film (the entire solid content of the paint film), is more preferably from 0.5 to 5% by mass, still more preferably from 0.5 to 2.5% by mass from the viewpoint of adhesiveness between the paint film and an electrodeposition-paint film, lubricity, and corrosion resistance.

(Average Thickness of Paint film)

The average thickness of the paint film is from 0.5 to 3 $\mu$m.

In a case in which the average thickness of the paint film is too thin, corrosion resistance is not sufficiently obtained. Adhesiveness between the paint film and an electrodeposition-paint film is also not sufficiently obtained. In this regard, in a case in which the average thickness of the paint film is too thick, aggregation force of the paint film deteriorates, and thus weldability is not sufficiently obtained.

Accordingly, the average thickness of the paint film is in the above range.

The average thickness of the paint film is preferably from 0.8 to 2.2 $\mu$m, more preferably from 1.2 to 1.8 $\mu$m.

The average thickness of the paint film is measured as follows.

First, a surface-treated substrate having the paint film is cut along with the sheet thickness direction, thereby exposing its cross section, resin embedding is carried out, and then the cross section exposed is polished with a polishing machine. Au is vapor-deposited on the cross section after polishing, thereby producing a sample for cross section observation.

The cross section thus obtained is observed with a scanning-type electron microscope, and an observation image of the cross section in the paint film is obtained. The thickness of the paint film is measured at 10 positions in the observation image, and the arithmetic average value is calculated. In a case in which the thickness of the paint film is measured, the thickness is measured at 10 positions at an equal interval of 40 $\mu$m in a direction in which the paint film extends in the observation image.

Observation conditions of the scanning-type electron microscope are as follows.

· Measurement apparatus: JSM-7200F manufactured by JEOL Ltd.
· Magnification: 3000x
· Acceleration voltage: 10 keV

(Formation of Paint film)

The method of forming the paint film is not particularly limited, and a well-known method can be utilized. For example, a composition for paint film formation (coating material) is obtained in which the binder resin, the doped zinc oxide particle, and the rust inhibitor, and, if necessary, such other components are mixed in a solvent. The solvent may be water or an organic solvent, and is preferably water in terms of production cost and environmental suitability. In other words, the composition for paint film formation is preferably a water-based composition. At least one surface of the Zn-Al-Mg-based coated steel sheet is coated with the composition for paint film formation, and a film obtained by coating is dried, or dried and heated, whereby the paint film is formed. It is here preferable that degreasing and water washing are applied to a Zn-Al-Mg-based coated steel sheet surface before coating with the composition for paint film formation.

The coating with the composition for paint film formation is here made by use of a coating method, such as bar coating, roll coating, blade coating, or curtain coating.

The drying temperature of the paint film is preferably from 50 to 120°C, more preferably from 60 to 100°C in terms of the maximum achieving temperature of the Zn-Al-Mg-based coated steel sheet surface.

The heating temperature of the paint film is preferably from 100 to 240°C, more preferably from 120 to 210°C in terms of the maximum achieving temperature of the Zn-Al-Mg-based coated steel sheet surface.

<Other Aspects of Surface-Treated Steel Sheet>

The surface-treated steel sheet according to the embodiment may have an intermediate-paint film (a functional paint film such as a chemical-conversion-treated film) between the Zn-Al-Mg-based Coated steel sheet and the paint film.

The intermediate-paint film is preferably an intermediate-paint film containing a binder resin, a silane coupling agent, a silica fine particle, a phosphoric acid compound, and a fluorine compound, and having an average thickness of from 0.1 to 0.5 $\mu$m.

An intermediate-paint film that has the above composition and the above average thickness is included, whereby corrosion resistance can be improved relatively without loss in weldability. The reason for this is because a relatively small thickness of the intermediate-paint film has a small effect on weldability and leads to an improvement in adhesiveness between the coated steel sheet and the paint film, thereby resulting in an improvement in corrosion resistance.

Therefore, the surface-treated steel sheet according to the embodiment preferably has an intermediate-paint film (functional paint film) that has the above composition and the above average thickness, between the Zn-Al-Mg-based coated steel sheet and the paint film.

The average thickness of the intermediate-paint film is measured in the same manner as the average thickness of the paint film.

<Coating Member>

The coating member according to the embodiment includes a forming material in which the surface-treated steel sheet according to the embodiment is formed, and an electrodeposition-paint film formed on a paint film of the forming material (namely, the paint film of the surface-treated steel sheet) (see FIG. 2).

In FIG. 2, 100 represents the coating member, 10A represents the forming material, 11A represents a matrix steel sheet (an objective steel sheet on which a Zn-Al-Mg-based coating layer is to be formed) in the forming material, 12A represents a Zn-Al-Mg-based coating layer of the forming material, 13A represents the paint film of the forming material, and 14 represents the electrodeposition-paint film. FIG. 2 illustrates an example of a coating member in which a predetermined cross section has a hut shape, but the whole shape of the coating member and the cross section shape are not particularly limited, and the coating member may have any shape.

The coating member according to the embodiment is produced, for example, as follows. First, for example, a well-known forming technique including cutting and press forming is utilized to form the surface-treated steel sheet, whereby an objectively shaped forming material is formed. The forming material may be, if necessary, assembled into a desired shape by welding (spot welding or the like).

Next, electrodeposition-coating treatment is applied to a paint film of the forming material. Thus, an electrodeposition-paint film is formed on the paint film. The electrodeposition-coating treatment may be any of anionic electrodeposition-coating or cationic electrodeposition-coating, and a cationic electrodeposition-coating material is preferred in terms of corrosion resistance.

In particular, in a case in which an electrodeposition-paint film is formed by cationic electrodeposition-coating treatment with a water-based coating material including a resin [for example, a water-based resin (for example, a known water-based resin such as an acrylic resin, a polyester resin, an alkyd resin, an epoxy resin, or a polyurethane resin) having a hydrophilic group such as a carboxyl group, a hydroxyl group, a methylol group, an amino group, a sulfonic acid group, or a polyoxyethylene bond, and a functional group reactive with a curing agent, such as a hydroxyl group], such a curing agent (a melamine resin, a block polyisocyanate, or the like), and any other additive (any known additive such as a coloring pigment, an optically coherent pigment, an extender pigment, a dispersant, an antisettling agent, a reaction promoter, a defoamer, a thickener, a rust inhibitor, an ultraviolet absorber, or a surface conditioner), adhesiveness between the paint film and the electrodeposition-paint film is easily improved.

Thereafter, any other paint film such as an intermediate-paint film or an overpaint film may be, if necessary, formed on the electrodeposition-paint film of the forming material.

The coating member according to the embodiment is produced through these steps.

The forming material in which the paint film is formed may be subjected to chemical conversion treatment (for example, phosphate treatment, Zr treatment, or the like) after degreasing and surface conditioning of the paint film, before electrodeposition-coating. The chemical conversion treatment can be applied, thereby forming a chemical conversion-treated film in a required region other than the paint film, although such a chemical conversion-treated film is hardly formed on the paint film. Accordingly, adhesiveness of the electrodeposition-paint film can be improved as a whole forming material (coating member).

The coating member according to the embodiment is widely utilized in applications of automobile members (automobile bodies, underbody members, or the like), mechanical members (housings or the like), home-appliance members (housings or the like), building materials (roofs, walls, or the like), or the like.

Examples

Hereinafter, the disclosure is further described with reference to Examples, but the disclosure is not limited to the following Examples. Various conditions can be adopted in the disclosure without departing from the gist of the disclosure as long as the objects of the disclosure are achieved.

<Examples>

1. Production of Surface-Treated Steel Sheet

1.1 Preparation of Zinc-Based Coated steel Sheet

The following five types of zinc-based coated steel sheets were prepared, and were each immersed in an aqueous solution (2.5% by mass, 40°C) of a water-based alkaline degreasing agent (FC-301 manufactured by Nippon Parkerizing Co., Ltd.) for 2 minutes, to perform surface degreasing, and thereafter washed with water and dried, thereby providing each zinc-based coated steel sheet for surface treatment.

Here, a cold-rolled steel sheet was also prepared as a steel sheet for surface treatment.

ZA: Zn-Al-Mg-ternary molten galvanized steel sheet (Zn-11%, Al-3%, Mg-0.2%, Si) (thickness 0.8 mm)
ZB: Zn-Al-Mg-ternary molten galvanized steel sheet (Zn-2%, Al-2%, Mg) (thickness 0.8 mm)
ZC: Molten galvanized steel sheet (thickness 0.8 mm)
ZD: Alloyed molten galvanized steel sheet (thickness 0.8 mm, 10% by mass of Fe)
C: Cold-rolled steel sheet (thickness 0.8 mm, no coating)

Table 2 shows the amount of coating weight. Control of the amount attached was carried out by adjusting the rate of lifting of coating during coating production and the amount of wiping.

1.2 Formation of Intermediate-paint film (Chemical Conversion-Treated Film)

Next, the following treatment liquid S for chemical conversion treatment was prepared, the zinc-based coated steel sheet or the cold-rolled steel sheet was coated with the liquid with variation in count of bar coating so that the average thickness of the intermediate-paint film, shown in Table 2, was achieved, and thereafter the resultant was air-dried by heating and drying in a hot-air oven so that the achieving temperature on a surface of the zinc-based coated steel sheet or the cold-rolled steel sheet was 70°C, whereby an intermediate-paint film was formed on the surface of the zinc-based coated steel sheet or the cold-rolled steel sheet.

Herein, formation of such an intermediate-paint film was not carried out in some examples.

S1: Treatment liquid for chemical conversion treatment, having a concentration of a solid content including a silane coupling agent, a silica fine particle, a urethane resin, a phosphoric acid compound, and a fluorine compound, of 10%

S2: Treatment liquid for chemical conversion treatment, having a concentration of a solid content including a Zr compound, a silane coupling agent, a phosphoric acid compound, and a vanadium compound, of 10%

1.3 Formation of paint film

Next, in order to form a paint film having a composition (% by mass) shown in Table 1, each component was mixed so that the solid content concentration was 20% by mass, whereby a coating material for paint film formation was prepared. The zinc-based coated steel sheet or the cold-rolled steel sheet, or a chemical conversion-treated film was coated with the coating material by a bar coater with variations in count of bar coating and rate of dilution so that the average thickness shown in Table 2 was achieved, and the resultant was dried, or dried and heated with an oven under a condition of the maximum achieving temperature (PMT) described in Table 2, whereby a paint film was formed.

The components included in the coating material are shown below.

(Binder Resin and the like)

J1: Epoxy resin (ADEKA RESIN EM-0461N manufactured by ADEKA CORPORATION)
J2: Polyester resin (Vylonal MD1480 manufactured by Vylon Corporation)
J3: Urethane resin (SUPERFLEX 150 manufactured by DKS Co., Ltd.)
J4: Epoxy resin (ADEKA RESIN EP-4100 manufactured by ADEKA CORPORATION)
J5: Polyester resin (Vylon 200 manufactured by Vylon Corporation)
J6: Melamine resin (CYMEL 325 manufactured by Allnex Japan Inc.)
J7: Water-soluble isocyanate (ELASTRON BN-77 manufactured by DKS Co., Ltd.) [0065] (Doped Zinc Oxide Particle)
Z1: Doped zinc oxide particle (23-Kt manufactured by HAKUSUI TECH, average particle size 0.5 $\mu$m)
Z2: Doped zinc oxide particle (23-K manufactured by HAKUSUI TECH, average particle size 0.2 $\mu$m)
Z3: Doped zinc oxide particle (Pazet CK manufactured by HAKUSUI TECH, average particle size 0.03 $\mu$m)
Z4: Zinc oxide particle (general reagent, average particle size 0.5 $\mu$m)
Z5: Titanium nitride particle (general reagent, average particle size 2.0 $\mu$m)

(Rust Inhibitor)

B1: Mixture of tannic acid (general reagent) and zinc naphthenate (general reagent) at a mass ratio of 1:1
B2: Mixture of tartaric acid (general reagent) and zinc naphthenate (general reagent) at a mass ratio of 1:1
B3: Mixture of tannic acid (general reagent) and trizinc phosphate (general reagent) at a mass ratio of 1:1
B4: Mixture of tartaric acid (general reagent) and trizinc phosphate (general reagent) at a mass ratio of 1:1
B5: Colloidal silica (particle size 20 nm)
B6: Aluminum dihydrogen tripolyphosphate (particle size 2 $\mu$m)
B7: Calcium ion-exchanged silica (rate of Ca exchange 9%) (particle size 2 $\mu$m)
B8: Silica (particle size 2 $\mu$m)

(Solid Lubricant)

W1: Polyethylene wax (S-394 MG manufactured by CHEMBASE Co., Ltd.)
W2: Polytetrafluoroethylene (PTFE) particle (SST-1MG-RC manufactured by CHEMBASE Co., Ltd.)

2. Performance Evaluation Tests

The following performance evaluation tests were performed with respect to the surface-treated steel sheet of each example.

2.1 Corrosion Resistance Test

(Advance Preparation 1)

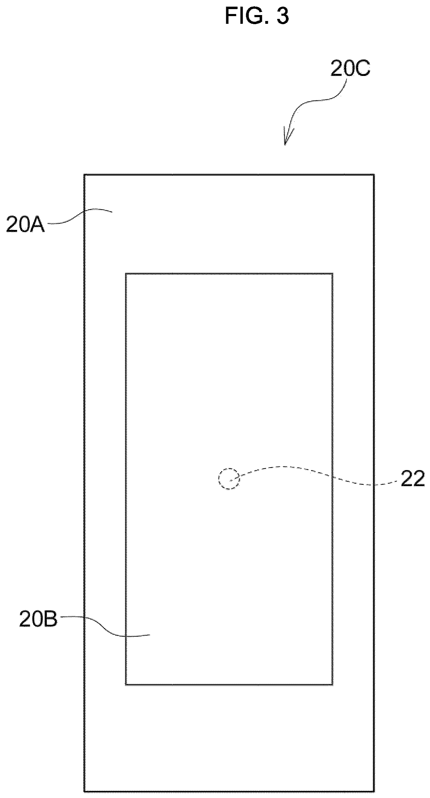

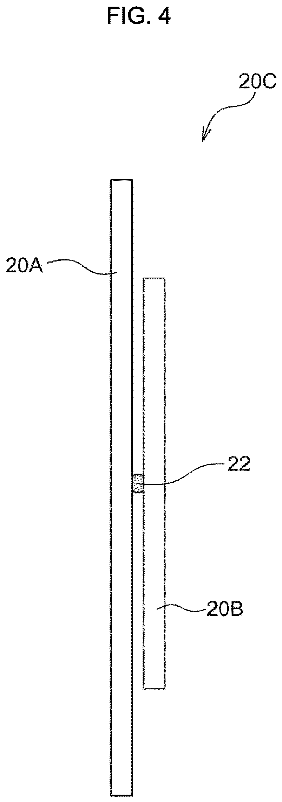

A test piece A cut to a size of 70 mm × 150 mm and a test piece B cut to a size of 50 mm × 100 mm were collected from the surface-treated steel sheet of each example.
Next, as illustrated in FIG. 3 to FIG. 4, the test piece A and the test piece B were joined by spot welding at the respective center positions in a state in which the test piece A and the test piece B were stacked so that the respective centers thereof were overlapped and the respective longitudinal directions thereof were parallel to each other in a plan view, whereby a joining test piece C was produced.
The spot welding position was one central position of each of the test piece A and the test piece B, and spot welding conditions were as follows: electrode used: CF-type Cr-Cu electrode with a tip diameter of 5 mm and R40, pressure applied: 1.96 kN, welding current: 8 kA, and conducting time: 12 cycles/50 Hz. In a case in which spot welding was performed, such spot welding was performed in a state in which a 0.1-mm gauge was sandwiched between the test piece A and the test piece B, and a gap (clearance) was provided between the test piece A and the test piece B.

(Advance Preparation 2)

The joining test piece C produced from the surface-treated steel sheet of each example was surface-conditioned with a surface-conditioning/treating agent PREPALENE X (trade name) manufactured by Nippon Parkerizing Co., Ltd., at room temperature for 20 seconds. Furthermore, chemical conversion treatment (phosphate treatment) was performed with a chemical conversion treatment liquid (zinc phosphate treatment liquid) "PALBOND 3020 (trade name)" manufactured by Nippon Parkerizing Co., Ltd. The temperature of the chemical conversion treatment liquid was set to 43°C, and the joining test piece C was immersed in the chemical conversion treatment liquid for 120 seconds, and thereafter washed with water and dried. After the chemical conversion treatment (phosphate treatment) was performed, electrodeposition-coating with a cationic electrodeposition coating material manufactured by NIPPONPAINT was performed by slop conducting at a voltage of 160 V, and furthermore baking coating was performed at a baking temperature of 170°C for 20 minutes. The average thickness of the electrodeposition-paint film was 10 $\mu$m in each of the joining test pieces C.

(Corrosion Resistance Test of Sheet-Joining Portion)

After the electrodeposition-coating, an end surface of the test piece A of the joining test piece C was sealed, and a corrosion cycle test of the joining test piece C was performed in a state in which salt water was sprayed to the test piece B of the joining test piece C. The corrosion cycle was performed for 360 cycles, with, as one cycle, salt water spray (SST: Salt Spray Test, 5% NaCl, 35°C atmosphere) for 2 hours, drying (60°C) for 2 hours, and wetting (50°C, 98% RH) for 4 hours. The corrosion cycle test was performed according to JASO M609-91.
Thereafter, after the corrosion test, a spot-welded portion of the joining test piece C was bored with a drill, thereby separating the test piece A and the test piece B, a corrosion condition of the overlapped surface of the test piece A with the test piece B was observed, and the following score was imparted.

After the test piece A was immersed in an aqueous ammonium citrate solution, thereby removing a corrosion product, the corrosion depth in the test piece A was measured. Specifically, the test piece A after removal of the corrosion product was cut into eight equal parts (divided into eight equal parts in total with division into two equal parts to right and left and division into four equal parts up and down in FIG. 3), thereby providing small pieces, and thereafter the corrosion depth (mm) in each of the small pieces was measured. The largest value among the corrosion depths (mm) in these eight small pieces was defined as the maximum corrosion depth (mm), and was evaluated as the result of the corrosion resistance test at the sheet-joining portion in the Examples.

In a case in which the score was "3", "4", or "5" in such a corrosion resistance test, it was determined that corrosion resistance was excellent. The results are shown in Table 2.

The corrosion depth was measured with a micrometer (CPM-MX manufactured by Mitutoyo Corporation).

1: generation of red rust on the entire joined surface of the test piece A with the test piece B, or a maximum corrosion depth of 0.4 mm or more
2: generation of red rust on 20% or more of the joined surface of the test piece A with the test piece B, or a maximum corrosion depth of from 0.2 to less than 0.4 mm
3: generation of red rust on from 5% to less than 20% of the joined surface of the test piece A with the test piece B, or a maximum corrosion depth of from 0.1 mm to less than 0.2 mm
4: generation of red rust on less than 5% of the joined surface of the test piece A with the test piece B, or a maximum corrosion depth of more than 0 mm to less than 0.1 mm
5: no generation of red rust from the joined surface of the test piece A with the test piece B, and a maximum corrosion depth of 0 mm (none)

2.2 Spot Weldability

Spot welding was performed for 500 spots with respect to such each surface-treated steel sheet, at a welding current value providing a nugget diameter of $4\sqrt{t}$ (t = thickness of surface-treated steel sheet) with variation in welding current, at a pressure applied of 1.96 kN for a conducting time of 12 cycles/50 Hz, by use of a CF-type Cr-Cu electrode with a tip diameter of 5 mm and R40, the nugget diameter and the electrode state at the completion of spot welding performed for 500 spots were observed, and the following scores were imparted. A spot with respect to spot welding causing non-conducting was determined by no formation of any nugget. The presence or absence of a nugget formed, and the nugget diameter were determined by observing a sheet thickness cross section including a spot center.

In a case in which the score was "3", "4", or "5" in such a weldability test, it was determined that weldability was excellent. The results are shown in Table 2.

1: unperformable 500 spots
2: performable for 500 spots, however, non-conducting caused before spot welding for 10 spots (including no non-conducting), and a diameter of the electrode contact surface determined with pressure-sensitive paper at the completion of spot welding for 500 spots, of 1.7 times or more the diameter of the electrode contact surface at the first spot
3: performed for 500 spots, no non-conducting, and a diameter of the electrode contact surface determined with pressure-sensitive paper at the completion of spot welding for 500 spots, of 1.4 times or more but less than 1.7 times the diameter of the electrode contact surface at the first spot
4: performed for 500 spots, no non-conducting, and a diameter of the electrode contact surface determined with pressure-sensitive paper at the completion of spot welding for 500 spots, of 1.1 times or more but less than 1.4 times the diameter of the electrode contact surface at the first spot
5: performed for 500 spots, no non-conducting, no wear damage of the electrode, or a diameter of the electrode contact surface determined with pressure-sensitive paper at the completion of spot welding for 500 spots, of less than 1.1 times the diameter of the electrode contact surface at the first spot

In FIG. 3 to FIG. 4, 20A represents the test piece A, 20B represents the test piece B, 20C represents the joining test piece C, and 22 represents the spot-welded portion.

[Table 1]

| Coating materia 1 No | Binder resin and the like | | | | | | Doped zinc oxide particle | | rust inhibitor | | Solid lubricant | | Inorganic substance* 1 |
| | Resin 1 | | Resin 2 | | Resin 3 | | | | | | | | |
| | Type | Composition (% by mass) | Type | Composition (% by mass) | Type | Composition (% by mass) | Type | Composition (% by mass) | Type | Composition (% by mass) | Type | Composition (% by mass) | Composition (% by mass) |
|---|---|---|---|---|---|---|---|---|---|---|---|---|---|
| 1 | J1 | 87 | - | 0 | - | 0 | Z1 | 1 | B1 | 10 | W1 | 2 | |
| 2 | J1 | 78 | - | 0 | - | 0 | Z1 | 10 | B1 | 10 | W1 | 2 | |
| 3 | J1 | 68 | - | 0 | - | 0 | Z1 | 20 | B1 | 10 | W1 | 2 | |
| 4 | J1 | 58 | - | 0 | - | 0 | Z1 | 30 | B1 | 10 | W1 | 2 | |
| 5 | J1 | 48 | - | 0 | - | 0 | Z1 | 40 | B1 | 10 | W1 | 2 | |
| 6 | J1 | 38 | - | 0 | - | 0 | Z1 | 50 | B1 | 10 | W1 | 2 | |
| 7 | J1 | 58 | - | 0 | - | 0 | Z2 | 30 | B1 | 10 | W1 | 2 | |
| 8 | J1 | 58 | - | 0 | - | 0 | Z3 | 30 | B1 | 10 | W1 | 2 | |
| 9 | J1 | 58 | - | 0 | - | 0 | Z4 | 30 | B1 | 10 | W1 | 2 | |
| 10 | J1 | 58 | - | 0 | - | 0 | Z5 | 30 | B1 | 10 | W1 | 2 | more than 1% |
| 11 | J1 | 68 | - | 0 | - | 0 | Z1 | 30 | - | 0 | W1 | 2 | |
| 12 | J1 | 58 | - | 0 | - | 0 | Z1 | 30 | B2 | 10 | W1 | 2 | |
| 13 | J1 | 58 | - | 0 | - | 0 | Z1 | 30 | B3 | 10 | W1 | 2 | |
| 14 | J1 | 58 | - | 0 | - | 0 | Z1 | 30 | B4 | 10 | W1 | 2 | |
| 15 | J1 | 67 | - | 0 | - | 0 | Z1 | 30 | B5 | 1 | W1 | 2 | |
| 16 | J1 | 67 | - | 0 | - | 0 | Z1 | 30 | B6 | 1 | W1 | 2 | |
| 17 | J1 | 67 | - | 0 | - | 0 | Z1 | 30 | B7 | 1 | W1 | 2 | |
| 18 | J1 | 67 | - | 0 | - | 0 | Z1 | 30 | B8 | 1 | W1 | 2 | |
| 19 | J1 | 65.5 | - | 0 | - | 0 | Z1 | 30 | B5 | 2.5 | W1 | 2 | more than 1% |
| 20 | J1 | 65.5 | - | 0 | - | 0 | Z1 | 30 | B6 | 2.5 | W1 | 2 | more than 1% |
| 21 | J1 | 65.5 | - | 0 | - | 0 | Z1 | 30 | B7 | 2.5 | W1 | 2 | more than 1% |
| 22 | J1 | 65.5 | - | 0 | - | 0 | Z1 | 30 | B8 | 2.5 | W1 | 2 | more than 1% |
| 23 | J1 | 58 | - | 0 | - | 0 | Z1 | 30 | B5 | 10 | W1 | 2 | more than 1% |
| 24 | J1 | 58 | - | 0 | - | 0 | Z1 | 30 | B6 | 10 | W1 | 2 | more than 1% |

EP 4 692 411 A1

14

(continued)

| Coating materia 1 No | Binder resin and the like | | | | | | Doped zinc oxide particle | | rust inhibitor | | Solid lubricant | | Inorganic substance* 1 |
| | Resin 1 | | Resin 2 | | Resin 3 | | | | | | | | |
| | Type | Composition (% by mass) | Type | Composition (% by mass) | Type | Composition (% by mass) | Type | Composition (% by mass) | Type | Composition (% by mass) | Type | Composition (% by mass) | Composition (% by mass) |
|---|---|---|---|---|---|---|---|---|---|---|---|---|---|
| 25 | J1 | 58 | - | 0 | - | 0 | Z1 | 30 | B7 | 10 | W1 | 2 | more than 1% |
| 26 | J1 | 58 | - | 0 | - | 0 | Z1 | 30 | B8 | 10 | W1 | 2 | more than 1% |
| 27 | J1 | 67 | - | 0 | - | 0 | Z1 | 30 | B1 | 1 | W1 | 2 | |
| 28 | J1 | 65.5 | - | 0 | - | 0 | Z1 | 30 | B1 | 2.5 | W1 | 2 | |
| 29 | J1 | 63 | - | 0 | - | 0 | Z1 | 30 | B1 | 5 | W1 | 2 | |
| 30 | J1 | 48 | - | 0 | - | 0 | Z1 | 30 | B1 | 20 | W1 | 2 | |
| 31 | J1 | 43 | - | 0 | - | 0 | Z1 | 30 | B1 | 25 | W1 | 2 | |
| 32 | J1 | 60 | - | 0 | - | 0 | Z1 | 30 | B1 | 10 | W1 | 0 | |
| 33 | J1 | 59 | - | 0 | - | 0 | Z1 | 30 | B1 | 10 | W1 | 1 | |
| 34 | J1 | 55 | - | 0 | - | 0 | Z1 | 30 | B1 | 10 | W1 | 5 | |
| 35 | J1 | 50 | - | 0 | - | 0 | Z1 | 30 | B1 | 10 | W1 | 10 | |
| 36 | J2 | 51 | J6 | 7 | - | 0 | Z1 | 30 | B1 | 10 | W1 | 2 | |
| 37 | J3 | 53 | J7 | 5 | - | 0 | Z1 | 30 | B1 | 10 | W1 | 2 | |
| 38 | J4 | 58 | - | 0 | - | 0 | Z1 | 30 | B1 | 10 | W1 | 2 | |
| 39 | J5 | 51 | J6 | 7 | - | 0 | Z1 | 30 | B1 | 10 | W1 | 2 | |
| 40 | J1 | 33 | 12 | 20 | J6 | 5 | Z1 | 30 | B1 | 10 | W1 | 2 | |
| 41 | J1 | 36 | J3 | 20 | J7 | 2 | Z1 | 30 | B1 | 10 | W1 | 2 | |

EP 4 692 411 A1

[Table 2-1]

| Test No. | Coated steel sheet | | Intermediate-paint film | | Paint film | | | Evaluation results | | |
|---|---|---|---|---|---|---|---|---|---|---|
| | Type of coating | Amount attached g/m2 | Type | Thickness μm | Type | Thickness μm | PMT°C | Corrosion resistance | Weldability | |
| 1 | ZA | 30 | - | 0 | 1 | 1.5 | 100 | 4 | 1 | Comparative Example |
| 2 | ZA | 30 | - | 0 | 2 | 1.5 | 100 | 4 | 2 | Comparative Example |
| 3 | ZA | 30 | - | 0 | 3 | 1.5 | 100 | 4 | 4 | Example |
| 4 | ZA | 30 | - | 0 | 4 | 1.5 | 100 | 4 | 5 | Example |
| 5 | ZA | 30 | - | 0 | 5 | 1.5 | 100 | 3 | 5 | Example |
| 6 | ZA | 30 | - | 0 | 6 | 1.5 | 100 | 2 | 5 | Comparative Example |
| 7 | ZA | 30 | - | 0 | 7 | 1.5 | 100 | 4 | 4 | Example |
| 8 | ZA | 30 | - | 0 | 8 | 1.5 | 100 | 4 | 2 | Comparative Example |
| 9 | ZA | 30 | - | 0 | 9 | 1.5 | 100 | 4 | 1 | Comparative Example |
| 10 | ZA | 30 | - | 0 | 10 | 1.5 | 100 | 4 | 1 | Comparative Example |
| 11 | ZA | 20 | - | 0 | 11 | 1.5 | 100 | 2 | 5 | Comparative Example |
| 12 | ZA | 30 | - | 0 | 12 | 1.5 | 100 | 4 | 5 | Example |
| 13 | ZA | 30 | - | 0 | 13 | 1.5 | 100 | 4 | 5 | Example |
| 14 | ZA | 30 | - | 0 | 14 | 1.5 | 100 | 4 | 5 | Example |
| 15 | ZA | 30 | - | 0 | 15 | 1.5 | 100 | 3 | 3 | Example |
| 16 | ZA | 30 | - | 0 | 16 | 1.5 | 100 | 3 | 3 | Example |
| 17 | ZA | 30 | - | 0 | 17 | 1.5 | 100 | 3 | 3 | Example |
| 18 | ZA | 30 | - | 0 | 18 | 1.5 | 100 | 3 | 3 | Example |
| 19 | ZA | 30 | - | 0 | 19 | 1.5 | 100 | 3 | 2 | Comparative Example |
| 20 | ZA | 30 | - | 0 | 20 | 1.5 | 100 | 3 | 2 | Comparative Example |
| 21 | ZA | 30 | - | 0 | 21 | 1.5 | 100 | 3 | 2 | Comparative Example |
| 22 | ZA | 30 | - | 0 | 22 | 1.5 | 100 | 3 | 2 | Comparative Example |
| 23 | ZA | 30 | - | 0 | 23 | 1.5 | 100 | 4 | 2 | Comparative Example |
| 24 | ZA | 30 | - | 0 | 24 | 1.5 | 100 | 4 | 2 | Comparative Example |
| 25 | ZA | 30 | - | 0 | 25 | 1.5 | 100 | 4 | 2 | Comparative Example |

| Test No. | Coated steel sheet | | Intermediate-paint film | | Paint film | | | Evaluation results | | |
|---|---|---|---|---|---|---|---|---|---|---|
| | Type of coating | Amount attached g/m2 | Type | Thickness μm | Type | Thickness μm | PMT °C | Corrosion resistance | Weldability | |
| 26 | ZA | 30 | - | 0 | 26 | 1.5 | 100 | 4 | 2 | Comparative Example |
| 27 | ZA | 30 | - | 0 | 27 | 1.5 | 100 | 3 | 5 | Example |
| 28 | ZA | 30 | - | 0 | 28 | 1.5 | 100 | 3 | 5 | Example |
| 29 | ZA | 30 | - | 0 | 29 | 1.5 | 100 | 4 | 5 | Example |
| 30 | ZA | 30 | - | 0 | 30 | 1.5 | 100 | 4 | 4 | Example |
| 31 | ZA | 30 | - | 0 | 31 | 1.5 | 100 | 3 | 3 | Example |
| 32 | ZA | 30 | - | 0 | 32 | 1.5 | 100 | 4 | 5 | Example |
| 33 | ZA | 30 | - | 0 | 33 | 1.5 | 100 | 4 | 5 | Example |
| 34 | ZA | 30 | - | 0 | 34 | 1.5 | 100 | 4 | 5 | Example |
| 35 | ZA | 30 | - | 0 | 35 | 1.5 | 100 | 3 | 4 | Example |
| 36 | ZA | 30 | - | 0 | 36 | 1.5 | 200 | 4 | 5 | Example |
| 37 | ZA | 30 | - | 0 | 37 | 1.5 | 100 | 4 | 5 | Example |
| 38 | ZA | 30 | - | 0 | 38 | 1.5 | 200 | 4 | 5 | Example |
| 39 | ZA | 30 | - | 0 | 39 | 1.5 | 200 | 4 | 5 | Example |
| 40 | ZA | 30 | - | 0 | 40 | 1.5 | 200 | 4 | 5 | Example |
| 41 | ZA | 30 | - | 0 | 41 | 1.5 | 100 | 4 | 5 | Example |

[Table 2-2]

| Test No. | Coated steel sheet: Type of coating | Intermediate-paint film: Amount attached g/m2 | Paint film: Type | Paint film: Thickness μm | Evaluation results: Type | Evaluation results: Thickness μm | Evaluation results: PMT °C | Evaluation results: Corrosion resistance | Evaluation results: Weldability | |
|---|---|---|---|---|---|---|---|---|---|---|
| 42 | ZA | 10 | - | 0 | 4 | 1.5 | 100 | 2 | 5 | Comparative Example |
| 43 | ZA | 20 | - | 0 | 4 | 1.5 | 100 | 3 | 5 | Example |
| 44 | ZA | 25 | - | 0 | 4 | 1.5 | 100 | 4 | 5 | Example |
| 45 | ZA | 40 | - | 0 | 4 | 1.5 | 100 | 4 | 5 | Example |
| 46 | ZA | 50 | - | 0 | 4 | 1.5 | 100 | 4 | 4 | Example |
| 47 | ZA | 60 | - | 0 | 4 | 1.5 | 100 | 5 | 3 | Example |
| 48 | ZA | 90 | - | 0 | 4 | 1.5 | 100 | 5 | 2 | Comparative Example |
| 49 | ZA | 120 | - | 0 | 4 | 1.5 | 100 | 5 | 2 | Comparative Example |
| 50 | ZB | 10 | - | 0 | 4 | 1.5 | 100 | 2 | 5 | Comparative Example |
| 51 | ZB | 20 | - | 0 | 4 | 1.5 | 100 | 3 | 5 | Example |
| 52 | ZB | 30 | - | 0 | 4 | 1.5 | 100 | 4 | 4 | Example |
| 53 | ZB | 60 | - | 0 | 4 | 1.5 | 100 | 4 | 3 | Example |
| 54 | ZB | 90 | - | 0 | 4 | 1.5 | 100 | 4 | 2 | Comparative Example |
| 55 | ZB | 120 | - | 0 | 4 | 1.5 | 100 | 5 | 2 | Comparative Example |
| 56 | ZC | 30 | - | 0 | 4 | 1.5 | 100 | 1 | 4 | Comparative Example |
| 57 | ZC | 60 | - | 0 | 4 | 1.5 | 100 | 2 | 4 | Comparative Example |
| 58 | ZD | 30 | - | 0 | 4 | 1.5 | 100 | 1 | 5 | Comparative Example |
| 59 | ZD | 60 | - | 0 | 4 | 1.5 | 100 | 2 | 5 | Comparative Example |
| 60 | C | 0 | - | 0 | 4 | 1.5 | 100 | 1 | 5 | Comparative Example |
| 61 | C | 0 | - | 0 | 4 | 1.5 | 100 | 1 | 5 | Comparative Example |
| 62 | ZA | 30 | S1 | 0.1 | 4 | 1.5 | 100 | 4 | 5 | Example |
| 63 | ZA | 30 | S1 | 0.3 | 4 | 1.5 | 100 | 5 | 4 | Example |
| 64 | ZA | 30 | S1 | 0.5 | 4 | 1.5 | 100 | 5 | 3 | Example |
| 65 | ZA | 30 | S2 | 0.1 | 4 | 1.5 | 100 | 4 | 5 | Example |

(continued)

| Test | Coated steel sheet | | Intermediate-paint film | | Paint film | | | | | |
|---|---|---|---|---|---|---|---|---|---|---|
| No. | Type of coating | Amount attached g/m2 | Type | Thickness $\mu$m | Type | Thickness $\mu$m | PMT °C | Corrosion resistance | Weldability | Evaluation results |
| 66 | ZA | 30 | S2 | 0.3 | 4 | 1.5 | 100 | 4 | 4 | Example |
| 67 | ZA | 30 | S2 | 0.5 | 4 | 1.5 | 100 | 4 | 3 | Example |
| 68 | ZA | 30 | - | 0 | 4 | 0.1 | 100 | 2 | 2 | Comparative Example |
| 69 | ZA | 30 | - | 0 | 4 | 0.5 | 100 | 3 | 3 | Example |
| 70 | ZA | 30 | - | 0 | 4 | 1 | 100 | 4 | 3 | Example |
| 71 | ZA | 30 | - | 0 | 4 | 2 | 100 | 4 | 4 | Example |
| 72 | ZA | 30 | - | 0 | 4 | 3 | 100 | 5 | 3 | Example |
| 73 | ZA | 30 | - | 0 | 4 | 6 | 100 | 5 | 2 | Comparative Example |

It can be seen from the above results that the surface-treated steel sheets of the Examples are excellent in both corrosion resistance and weldability as compared with the surface-treated steel sheets of Comparative Examples.

In Table 1, the designation "Inorganic substance* 1" represents the composition of "Inorganic substance other than a Zn-containing compound including a doped zinc oxide particle" with respect to the paint film.

The disclosure of Japanese Patent Application No. 2023-056126 is herein incorporated by reference in its entirety.

All literatures, patent applications, and technical standards described herein are herein incorporated by reference, as if each individual literature, patent application, and technical standard were specifically and individually indicated to be incorporated by reference.

**Claims**

1. surface-treated steel sheet, comprising:

   a Zn-Al-Mg-based coated steel sheet having a coating weight per one surface of from 20 to 60 g/m$^2$; and
   a paint film placed on at least one main surface of the Zn-Al-Mg-based coated steel sheet, wherein:

   the paint film comprises a binder resin, a doped zinc oxide particle, and a rust inhibitor,
   an average thickness of the paint film is from 0.5 to 3 $\mu$m,
   an average particle size of the doped zinc oxide particle is from 0.1 to 2 $\mu$m,
   a content of the doped zinc oxide particle is from 20 to 40% by mass with respect to the paint film, and
   a content of an inorganic substance other than a Zn-containing compound in the paint film is from 0 to 1% by mass with respect to the paint film.

2. The surface-treated steel sheet according to claim 1, wherein:

   the rust inhibitor is an organic acid, and
   a content of the rust inhibitor is from 1 to 20% by mass with respect to the paint film.

3. The surface-treated steel sheet according to claim 1, wherein:

   the surface-treated steel sheet has an intermediate paint film between the Zn-Al-Mg-based coated steel sheet and the paint film,
   the intermediate paint film comprises a binder resin, a silane coupling agent, a silica fine particle, a phosphoric acid compound, and a fluorine compound, and
   an average thickness of the intermediate paint film is from 0.1 to 0.5 $\mu$m.

4. The surface-treated steel sheet according to claim 1, wherein:
   a chemical composition of a Zn-Al-Mg-based coating layer in the Zn-Al-Mg-based coated steel sheet, in terms of an average composition, contains Al: from 4 to 22% by mass, and Mg: from 1.0 to 10% by mass, and a balance contains Zn and impurities.

## FIG. 1

## FIG. 2

FIG. 3

FIG. 4

20C

20A

22

20B

## INTERNATIONAL SEARCH REPORT

| International application No. |
|---|
| **PCT/JP2024/013330** |

**A. CLASSIFICATION OF SUBJECT MATTER**

***C23C 2/06***(2006.01)i; ***B32B 15/08***(2006.01)i; ***B32B 27/18***(2006.01)i

FI: C23C2/06; B32B15/08 A; B32B27/18 E

According to International Patent Classification (IPC) or to both national classification and IPC

**B. FIELDS SEARCHED**

Minimum documentation searched (classification system followed by classification symbols)

C23C2/06; B32B15/08; B32B27/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2018-90885 A (NISSHIN STEEL CO., LTD.) 14 June 2018 (2018-06-14)<br>entire text | 1-4 |
| A | JP 2019-105098 A (NIPPON STEEL NISSHIN CO., LTD.) 27 June 2019 (2019-06-27)<br>entire text | 1-4 |
| A | WO 2020/100286 A1 (NIPPON STEEL CORPORATION) 22 May 2020 (2020-05-22)<br>entire text | 1-4 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **04 June 2024** | **11 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/013330**

| Patent document cited in search report | | | Publication date (day/month/year) | Patent family member(s) | Publication date (day/month/year) |
|---|---|---|---|---|---|
| JP | 2018-90885 | A | 14 June 2018 | (Family: none) | |
| JP | 2019-105098 | A | 27 June 2019 | (Family: none) | |
| WO | 2020/100286 | A1 | 22 May 2020 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018092244 A
- JP 2023056126 A